# EUROPEAN PATENT APPLICATION

(11) **EP 4 721 601 A1**
(43) Date of publication of application: **08.04.2026**
(21) Application number: 24814234.1
(22) Date of filing: 20.05.2024
(51) Int. Cl.: A24F 40/46, A24F 40/48, A24F 40/10, C03C 10/00

(54) **ATOMIZATION CORE, ATOMIZER AND ELECTRONIC ATOMIZATION DEVICE**

(30) Priority: 01.06.2023 CN 202310647629
(71) Applicant: Smoore International Holdings Limited, Grand Cayman, KY1-1111 (KY)
(72) Inventor: WANG, Jianguo, Shenzhen, Guangdong 518102 (CN); XIAO, Lingrong, Shenzhen, Guangdong 518102 (CN); NAN, Bo, Shenzhen, Guangdong 518102 (CN); TANG, Genchu, Shenzhen, Guangdong 518102 (CN); LUO, Hongliang, Shenzhen, Guangdong 518102 (CN)
(74) Representative: Winter, Brandl - Partnerschaft mbB
(86) International application number: PCT/CN2024/094269
(87) International publication number: WO 2024/245035

(57) **Abstract**

This application relates to the field of electronic atomization technologies, and in particular, to an atomization core, an atomizer, and an electronic atomization device. The atomization core provided in this application includes a porous substrate and a heating element. The porous substrate is a porous glass-ceramic substrate. Any 2 measurement areas on the porous glass-ceramic substrate are respectively denoted as a first measurement area and a second measurement area. By atomic percentage, a main element content in the first measurement area is denoted as Mat%, and a corresponding main element content in the second measurement area is denoted as Nat%, where |M-N|/M is less than 10% and/or |M-N|/N is less than 10%; the length of the measurement area is at least greater than 1 µm; and the main element is an element with an element content greater than 20 at% in the porous glass-ceramic substrate. Through control of the foregoing conditions, strength of the porous substrate can be effectively enhanced, the substrate exhibits better stability, and a service life thereof is effectively prolonged.

## Description

### CROSS-REFERENCE TO RELATED APPLICATIONS

This application claims priority to Chinese Patent Application No. 202310647629.4, filed with China National Intellectual Property Administration on June 1, 2023 and entitled "ATOMIZATION CORE, ATOMIZER, AND ELECTRONIC ATOMIZATION DEVICE", which is incorporated herein by reference in its entirety.

### TECHNICAL FIELD

This application relates to the field of electronic atomization technologies, and in particular, to an atomization core, an atomizer, and an electronic atomization device.

### BACKGROUND

As a good substitute for a conventional cigarette, an e-cigarette has an advantage of reducing harmful substances such as tar and CO in smoke. Currently, a main atomization manner of a commercially available e-cigarette is resistance heating atomization, and e-liquid is atomized through heating of an atomization core. An existing atomization core usually includes a porous substrate and a heating element. The porous substrate is usually made of a material with a porous structure, such as a cotton core and a porous ceramic, to achieve a function of guiding an atomization medium toward the heating element.

However, in the related art, a ceramic material is usually manufactured by using, for example, diatomite. A conventional ceramic material such as diatomite has complex composition, which results in relatively poor strength of a porous substrate of the e-cigarette. As a result, a thermal impact resistance thereof is relatively poor, and local detachment and fracture are easily caused, thereby affecting a service life thereof.

### SUMMARY

An objective of this application is to provide an atomization core, an atomizer, and an electronic atomization device, so as to overcome a defect in the related art that a porous substrate of an atomization core has relatively poor strength and affects a service life thereof.

To achieve the foregoing objective, this application adopts the following technical solutions.

This application provides an atomization core. The atomization core includes a porous substrate and a heating element.

The porous substrate is a porous glass-ceramic substrate, any 2 measurement areas on the porous glass-ceramic substrate are respectively denoted as a first measurement area and a second measurement area, and by atomic percentage, a main element content in the first measurement area is denoted as Mat%, and a corresponding main element content in the second measurement area is denoted as Nat%, where |M-N|/M is less than 10% and/or |M-N|/N is less than 10%.

The length of the measurement area is at least greater than 1 µm; and a main element is an element whose element content in the porous glass-ceramic substrate is greater than 20 at%.

Optionally, by atomic percentage, the main element content in the first measurement area is denoted as Mat%, the corresponding main element content in the second measurement area is denoted as Nat%, and |M-N|/M is less than 5% and/or |M-N|/N is less than 5%.

Optionally, the main element includes a first main element and a second main element; and by atomic percentage, a content of the first main element in the porous glass-ceramic substrate ranges from 55 at% to 64 at%; and a content of the second main element ranges from 20 at% to 36 at%.

Optionally, the first main element is O, and the second main element is Si.

Optionally, any 2 measurement areas on the porous glass-ceramic substrate are respectively denoted as a first measurement area and a second measurement area, and by atomic percentage, an O element content in the first measurement area is denoted as Mat%, and a corresponding O element content in the second measurement area is denoted as Nat%. |M-N|/M is less than 10% and/or |M-N|/N is less than 10%. A Si element content in the first measurement area is denoted as M' at%, and a corresponding Si element content in the second measurement area is denoted as N' at%, where |M'-N'|/M' is less than 10% and/or |M'-N'|/N' is less than 10%. The length of the measurement areas is at least greater than 1 µm.

Optionally, an element in the porous glass-ceramic substrate further includes at least one of Na, Mg, Al, or Ca.

Optionally, an average pore size of the porous glass-ceramic substrate ranges from 15 µm to 45 µm.

Optionally, the length of the measurement areas is at least twice the average pore size.

Optionally, a compressive strength of the porous glass-ceramic substrate is greater than 1.5 MPa.

Optionally, the compressive strength of the porous glass-ceramic substrate ranges from 6 MPa to 18 MPa.

Optionally, the porous glass-ceramic substrate includes a crystalline phase and an amorphous phase.

Optionally, a proportion of the crystalline phase is more than 50 wt%.

Optionally, the crystalline phase includes a quartz phase.

Optionally, the measurement area is at least one of a circle, an ellipse, or a rectangle.

Optionally, the heating element is a metal heating film.

This application provides an atomizer. The atomizer includes the foregoing atomization core.

This application further provides an electronic atomization device. The electronic atomization device includes the foregoing atomizer, and further includes a battery assembly.

Beneficial effects of this application are as follows.

This application adopts the porous glass-ceramic substrate as the porous substrate of the atomization core, and controls the main element content between any 2 measurement areas of the porous glass-ceramic substrate. Any 2 measurement areas on the porous glass-ceramic substrate are respectively denoted as the first measurement area and the second measurement area. By atomic percentage, the main element content in the first measurement area is denoted as Mat%, and the corresponding main element content in the second measurement area is denoted as Nat%, where |M-N|/M is less than 10% and/or |M-N|/N is less than 10%; the length of the measurement area is at least greater than 1 µm; and the main element is an element with an element content greater than 20 at% in the porous glass-ceramic substrate. The inventor finds that, by controlling the foregoing conditions, strength of the porous substrate and the atomization core can be effectively enhanced, the substrate exhibits better stability, and a service life thereof is effectively prolonged.

### BRIEF DESCRIPTION OF THE DRAWINGS

To describe technical solutions in specific implementations of this application or in the related art more clearly, the accompanying drawings required for describing the specific implementations or the related art are briefly described below. Apparently, the accompanying drawings in the following description show some implementations of this application, and a person of ordinary skill in the art may still derive other drawings from these accompanying drawings without creative efforts.
FIG. 1 is a physical diagram of an atomization core according to Embodiment 1 of this application.
FIG. 2 is a physical diagram of a porous substrate of an atomization core according to Embodiment 1 of this application.
FIG. 3 is a scanning electron micrography (SEM) diagram of a porous substrate of an atomization core and a selected measurement area thereof in Test example 1 according to Embodiment 2 of this application.
FIG. 4 is a selected measurement area of a porous substrate of Embodiment 2 according to Test example 1 of this application.
FIG. 5 is a schematic structural diagram of an atomizer according to this application.
FIG. 6 is a schematic structural diagram of an electronic atomization device according to this application.

Reference numerals: 1. Atomizer; 2. Battery assembly.

### DETAILED DESCRIPTION

The following embodiments are provided to better understand this application and are not intended limit an optimum implementation, and do not constitute a limitation to the content and the scope of protection of this application. Any product identical or similar to this application obtained by anyone under the inspiration of this application or by combining this application with the features of other prior art shall fall within the scope of protection of this application.

If no specific experimental steps or conditions are specified in the embodiments, the experiments can be carried out according to the conventional experimental steps or conditions described in the literature in the art. Reagents or instruments used without indicating the manufacturer are all conventional reagent products that can be purchased commercially.

In the related art, a ceramic material is usually manufactured by using, for example, diatomite. A conventional ceramic material such as the diatomite has complex composition, causing relatively poor strength of a manufactured porous substrate. As a result, a thermal impact resistance thereof is relatively poor, and detachment and fracture are easily caused, thereby affecting a service life thereof.

Therefore, this application provides an atomization core. The atomization core provided in this application includes a porous substrate and a heating element. The porous substrate is a porous glass-ceramic substrate. Any 2 measurement areas on the porous glass-ceramic substrate are respectively denoted as a first measurement area and a second measurement area. By atomic percentage, a main element content in the first measurement area is denoted as Mat%, and a corresponding main element content in the second measurement area is denoted as Nat%, where |M-N|/M is less than 10% and/or |M-N|/N is less than 10%; the length of the measurement area is at least greater than 1 µm; and the main element is an element with an element content greater than 20 at% in the porous glass-ceramic substrate. The inventor finds that, by controlling the foregoing conditions, the strength of the porous substrate and the atomization core containing the substrate can be effectively improved, the substrate exhibits better stability, and the service life thereof is effectively prolonged. In addition, entire strength and composition of the manufactured porous substrate are uniform. The porous substrate has higher stability in a case of thermal shock during an atomization process, and is not easy to locally cause cracks and damage due to different composition. In addition, the porous substrate has an easily controllable pore structure, a good e-liquid guiding effect, and is not easy to generate soot, and does not affecting taste. Therefore, the atomization core manufactured by the porous substrate has longer service life, and has a better e-liquid guiding effect, and the taste is not affected.

In an optional implementation, the first measurement area and the second measurement area may or may not intersect with each other. Optionally, the first measurement area and the second measurement area do not intersect with each other. By atomic percentage, a main element content of the first measurement area is denoted as Mat%, and a corresponding main element content of the second measurement area is denoted as Nat%, where |M-N|/M and/or |M-N|/N is less than 5%. For example, optionally, |M-N|/M and/or |M-N|/N is 0.01%, 0.1%, 0.2%, 0.5%, 0.7%, 0.9%, 1%, 1.3%, 1.4%, 1.6%, 1.8%, 1.9%, 2%, 2.1%, 2.6%, 2.8%, 2.9%, 3%, 3.4%, 3.6%, 3.7%, 3.8%, 3.9%, 4%, 4.2%, 4.3%, 4.5%, 4.7%, 4.8%, or 4.9%. The inventor finds that, by controlling |M-N|/M and/or |M-N|/N to be less than 5%, the uniform strength of the porous substrate can be further improved, the substrate exhibits better stability, and the service life thereof is effectively prolonged.

In an optional implementation, the main element includes a first main element and a second main element. Optionally, by atomic percentage, a content of the first main element in the porous glass-ceramic substrate ranges from 55 at% to 64 at%; and a content of the second main element ranges from 20 at% to 36 at%. For example, optionally, the first main element content is 55 at%, 57 at%, 59 at%, 60 at%, 61 at%, 63 at%, or 64 at%, and the second main element content is 20 at%, 21 at%, 22 at%, 24 at%, 26 at%, 27 at%, 28 at%, 29 at%, 30 at%, 31 at%, 32 at%, 33 at%, 34 at%, 35 at%, or 36 at%. Further, the first main element is O, and the second main element is Si.

In an optional embodiment, any 2 measurement areas on the porous glass-ceramic substrate are respectively denoted as a first measurement area and a second measurement area, and by atomic percentage, an O element content in the first measurement area is denoted as Mat%, and a corresponding O element content in the second measurement area is denoted as Nat%. |M-N|/M is less than 10% and/or |M-N|/N is less than 10%. A Si element content in the first measurement area is denoted as M' at%, and a corresponding Si element content in the second measurement area is denoted as N' at%, where |M'-N'|/M' is less than 10% and/or |M'-N'|/N' is less than 10%. The length of the measurement areas is at least greater than 1 µm.

In an optional implementation, an element in the porous glass-ceramic substrate further includes at least one of Na, Mg, Al, or Ca. Optionally, by atomic percentage, the element in the porous glass-ceramic substrate further includes at least one of 2.4-6 at% of Na, 0.13-3.18 at% of Mg, 0.23-2.42 at% of Al, or 1.35-6 at% of Ca.

In an optional implementation, the porous glass-ceramic substrate includes a crystalline phase and an amorphous phase, and a proportion of the crystalline phase is more than 50 wt%. For example, optionally, the proportion of the crystalline phase is 50 wt%, 55 wt%, 60 wt%, 65 wt%, 66 wt%, 70 wt%, 75 wt%, 80 wt%, 85 wt%, 90 wt%, or 95 wt%. Further, the crystalline phase includes a quartz phase. A substrate material of the prepared porous glass-ceramic substrate in this application is essentially glass-ceramic. The glass-ceramic has excellent mechanic and thermal properties such as corrosion resistance, high-temperature resistance, thermal shock resistance, and adjustable thermal expansion. Particularly, when the glass-ceramic is applied to an atomization core, good corrosion resistance determines good safety, and harmful composition is not easy to separate out. Good high-temperature and thermal shock resistance determines good mechanical stability and reliability under repeated high-temperature shocks.

In an optional implementation, an average pore size of the porous glass-ceramic substrate ranges from 15 µm to 45 µm. For example, optionally, the average pore size of the porous glass-ceramic substrate is 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, or 45 µm. The pore size has a medium range, which has an effect of liquid guiding and liquid locking. It should be noted that the pore size of the porous glass-ceramic substrate may also be controlled and adjusted by selecting the glass bubbles of the raw material, and the glass bubbles of the raw material having a required particle size may be obtained through suitable screening. The pore structure of the porous glass-ceramic substrate is controllable through suitable glass bubbles of a raw material and a manufacturing process.

A D50 particle size of glass-ceramic bubbles is a corresponding particle size when a cumulative particle size distribution percentage of the glass-ceramic bubbles reaches 50%. The particle size has a physical meaning that glass-ceramic bubbles having particle sizes greater than the particle size account for 50%, while glass-ceramic bubbles having particle sizes less than the particle size also account for 50%. D50 is also referred to as a median size or a median particle size. Similarly, the pore size of D50 corresponds to a pore size corresponding to a case in which the cumulative pore size distribution percentage of the porous glass-ceramic substrate reaches 50%. The physical meaning thereof is that pores with a pore size greater than the pore size account for 50%, and pores with a pore size less than the pore size also account for 50%.

In an optional implementation, the length of the measurement area is at least 2 times of the average pore size. For example, optionally, the length of the measurement area is at least 2 times, 3 times, 5 times, 10 times, 20 times, 30 times, 50 times, 100 times, 150 times, or 200 times of the average pore size. The length-width ratios of the selected measurement area are all less than 2. The inventor finds that the strength of the substrate can be effectively improved by controlling composition of the main content of the measurement areas selected within this range, and the uniform strength of the porous substrate can be achieved. In this application, the glass bubbles are sintered to obtain the substrate material. The composition of the porous substrate is uniform in a specific range, so that the porous substrate has a controllable structure, and a finished product exhibits higher strength, higher strength consistency, and higher reliability.

In an optional implementation, a compressive strength of the porous glass-ceramic substrate is greater than 1.5 MPa. Further, optionally, the compressive strength of the porous glass-ceramic substrate ranges from 6 MPa to 18 MPa. For example, optionally, the compressive strength of the porous glass-ceramic substrate is 6 MPa, 6.1 MPa, 6.3 MPa, 6.5 MPa, 6.6 MPa, 6.7 MPa, 6.8 MPa, 6.9 MPa, 7 MPa, 7.1 MPa, 7.3 MPa, 7.4 MPa, 7.5 MPa, 7.6 MPa, 7.8 MPa, 7.9 MPa, 8 MPa, 8.5 MPa, 9 MPa, 9.5 MPa, 10 MPa, 10.5 MPa, 11 MPa, 11.5 MPa, 12 MPa, 12.5 MPa, 13 MPa, 13.5 MPa, 14 MPa, 14.5 MPa, 15 MPa, 15.5 MPa, 16 MPa, 16.5 MPa, 17 MPa, 17.5 MPa, or 18 MPa.

In an optional implementation, the porous glass-ceramic substrate includes a crystalline phase and an amorphous phase, and a proportion of the crystalline phase is more than 50%. For example, optionally, the proportion of the crystalline phase is 50%, 55%, 60%, 65%, 66%, 70%, 75%, 80%, 85%, 90%, 95%, 99%, or 100%. Further, the crystalline phase includes a quartz phase.

In an optional implementation, a porosity of the porous glass-ceramic substrate ranges from 50% to 90%, for example, optionally, the porosity of the porous glass-ceramic substrate is 50%, 55%, 60%, 65%, 66%, 70%, 75%, 80%, 85%, or 90%.

This application is further described below in combination with the manufacturing method.

In some optional implementations, the manufacturing method of the atomization core includes the following steps.
1) Mix a glass raw material with a binder, a slipping agent, and water, and perform pressing and forming to obtain a green body.
2) Perform a first sintering, a second sintering, and a third sintering on the green body in step 1), to obtain the porous glass-ceramic substrate.
3) Manufacture a raw material of the heating element on the porous glass-ceramic substrate in step 2), and form through sintering.

In some optional implementations, in step 1): the glass raw material is selected from at least one of glass bubbles or glass power. The binder may be an organic binder. Specifically, the binder is selected from at least one of methylcellulose, hydroxyethyl cellulose, or hydroxypropyl methylcellulose. The slipping agent may be a slipping agent of an aliphatic hydrocarbon, for example, a paraffin, or a metal stearate. Specifically, the slipping agent is sodium stearate.

In some optional implementations, a pressure for pressing and forming in step 1) ranges from 1 bar to 40 bar. Most of the glass bubbles do not fragment during the pressing and forming process, and a complete spherical shape of the single glass bubble is maintained. Therefore, the pressure for pressing and forming may be properly adjusted based on a compressive strength of the selected glass bubble.

In some optional implementations, in step 2), a first temperature of the first sintering is at least 200°C, for example, 300°C to 400°C, and/or a first residence time is at least 1 minute, for example, 1 hour to 10 hours. During the sintering process at the temperature, a substance such as a solvent and a binder is removed from the green body.

In some optional implementations, a second temperature of the second sintering is greater than 400°C and less than a softening point of glass of the glass bubble. for example, 500°C, 600°C, or 700°C, and a second residence time thereof is at least 1 minute, for example, 1 hour to 10 hours. The purpose of the second temperature is greater than 400 °C and less than the softening point of the glass of the glass bubbles/glass powder is to keep an original form of the green body unchanged. In addition, because the temperature has already exceeded 400°C, glass composition in the glass bubbles/glass powder starts to change. A disordered glass phase partially crystallizes to a crystalline phase within the temperature range, and the glass bubbles are converted into the glass-ceramic bubbles or a proportion of the crystalline phase in the glass bubbles starts to increase. In addition, due to the conversion, some of the glass bubbles begin to crack and have at least one opening. Therefore, the sintering time within the temperature range may be properly adjusted to regulate the crystallinity of the porous glass-ceramic. It may be understood that the glass bubbles of the raw material/glass powder may also include a certain proportion of the crystalline phase, which may shorten the sintering time in this process.

In some optional implementations, a third temperature of the third sintering is greater than the softening point of the glass. Specifically, a temperature of the softening point of the glass is less than 900°C. A third residence time may be at least 1 minute, for example, 1 hour to 10 hours. At this temperature, the glass composition has flowability. Therefore, adjacent glass-ceramic bubbles are directly adhered to each other, and the glass-ceramic bubbles are adhered to form a porous glass-ceramic substrate of an integral structure. In addition, because the glass-ceramic bubbles still have crystalline phase composition, the crystalline phase composition, as a framework, causes the form of the glass-ceramic bubbles to not collapse, and still maintains a basic complete form. In addition, the glass-ceramic bubbles are further cracked to form a large quantity of openings. The openings are in communication with each other to form pores. The pores extend through the porous glass-ceramic substrate and reach a surface of the porous glass-ceramic substrate.

The third temperature is greater than the softening point of the glass of the glass bubble. The glass-ceramic bubbles are at least heated to a softening temperature of amorphous glass in the glass-ceramic bubble, so that most of the glass-ceramic bubbles open due to expansion of air in the bubble. In addition, the heating causes the adjacent glass-ceramic bubbles to sinter together and form a bond. Overall, the bonded open glass-ceramic bubbles form the pores of the porous glass-ceramic substrate. The glass-ceramic bubbles are applied to an atomizer and an electronic atomization device, so as to effectively improve atomization efficiency and a liquid guiding effect.

In some optional implementations, a mass ratio of the glass raw material to the binder, the slipping agent, and the water is (100-200) : (10-50) : (1-10) : (50-150). Optionally, the glass raw material is selected from the glass bubbles and the glass powder. Optionally, a mass ratio of the glass bubbles to the glass powder is (1-100) : (0-100).

In some optional implementations, in step 3), the raw material of the heating element may be at least one of the electronic paste (metal paste), the heating wire, or the heating mesh. The electronic paste may be directly applied to the surface of the porous glass-ceramic substrate through screen printing based on a preset contour, and then is formed through sintering at the preset temperature. The sintering temperature may be adaptively adjusted based on types of a bonding phase and metal composition in the electronic paste. Generally, the sintering temperature ranges from 400°C to 800°C. Optionally, in some other implementations, the heating element may also be evaporated/deposited on the substrate through physical vapor deposition (PVD) or chemical vapor deposition (CVD). Alternatively, metal wire or a metal mesh is directly welded/attached to the surface of the substrate.

In some optional implementations, the glass composition of the glass bubbles may be soda-lime silicate glass, borosilicate glass, or another glass. Specifically, the glass composition may include: 74-85% of SiO₂, 6.5-10% of CaO, 5-9% of B₂O₃, 0.4-2% of Al₂O₃, 0.01-1% of Fe₂O₃, 1-3% of Na₂O, and 0.1-0.5% of K₂O.

In some optional embodiments, in step 1), the pore-forming agent is further added. Optionally, the pore-forming agent is selected from at least one of starch, polymethyl methacrylate (PMMA), polystyrene (PS), or graphite. Optionally, a particle size of the pore-forming agent may range from 1 µm to 150 µm. It may be understood that the addition of the pore-forming agent may further increase the porosity of the porous glass-ceramic substrate in a case that the strength of the glass bubbles of the raw material is ensured.

In some optional implementations, in step 1), a second inorganic material is further included. The second inorganic material may be at least one of clay, talc, silica, or alumina. Melting points or softening points of the foregoing materials are greater than the softening point of the glass in the glass bubble. Optionally, a particle size of the pore-forming agent may range from 1 µm to 200 µm.

In some optional implementations, a mass ratio of the glass raw material to the binder, the slipping agent, the water, the pore-forming agent, and the second inorganic material is (100-200) : (10-50) : (1-10) : (50-150) : (0-125) : (0-9). Optionally, the glass raw material is selected from the glass bubbles and the glass powder. Optionally, a mass ratio of the glass bubbles to the glass powder is (1-100) : (0-100).

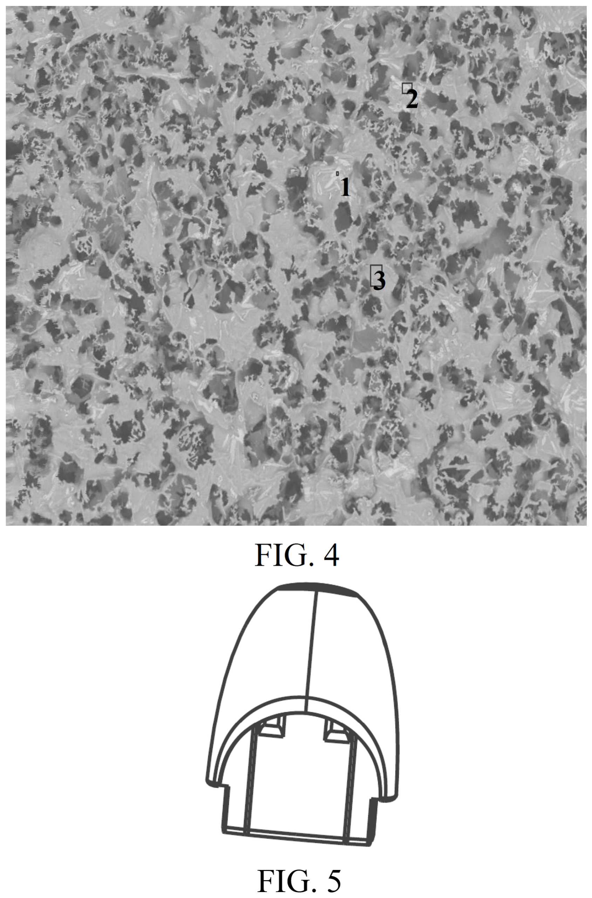

As shown in FIG. 5, this application further provides an atomizer. The atomizer includes the foregoing atomization core. The atomizer includes a shell. A liquid storage tank and an atomization cavity are formed in the shell. The liquid storage tank is configured to store a liquid atomization medium, and the atomization cavity is configured to accommodate the foregoing atomization core. The atomization core may atomize the liquid atomization medium.

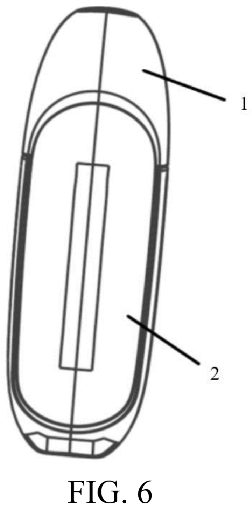

As shown in FIG. 6, this application further provides an electronic atomization device. The electronic atomization device includes the foregoing atomizer 1, and further includes a battery assembly 2. The battery assembly and the atomizer may be of an integrated structure or a detachable structure. The battery assembly is configured to supply power to the atomizer based on a preset mode, so that the atomizer atomizes the liquid atomization medium based on the preset mode.

This application is further described in detail below with reference to specific embodiments. These embodiments cannot be understood as limiting the protection scope of this application.

In this application, the composition of the glass bubbles is soda-lime silicate glass. The glass bubbles of the raw material with same composition are used in the following embodiments. For parameters of the raw material, reference is made to Table 1, and the specific implementation is as follows.

### Embodiment 1

This embodiment provides an atomization core. A manufacturing method thereof includes the following steps.
1) Mix 100 g of glass bubbles with 25 g of hydroxyethyl cellulose, 2.5 g of sodium stearate, and 50g of water, and perform pressing and forming to obtain a green body, where a forming pressure is 7 bar.
2) Perform a first sintering, a second sintering, and a third sintering on the green body in step 1), to obtain a porous glass-ceramic substrate, where a first sintering temperature is 230°C, a first sintering time is 1 hour, a second sintering temperature is 650°C, a second sintering time is 2 hours, a third sintering temperature is 1050°C, and a third sintering time is 1 hour, and finally, obtain the porous glass-ceramic substrate with natural cooling in a furnace.
3) Print heating element paste on the porous glass-ceramic substrate in step 2) and form through sintering, a sintering temperature being 620°C and a sintering time being 1 hour, to obtain the atomization core. The heating element paste is stainless steel.

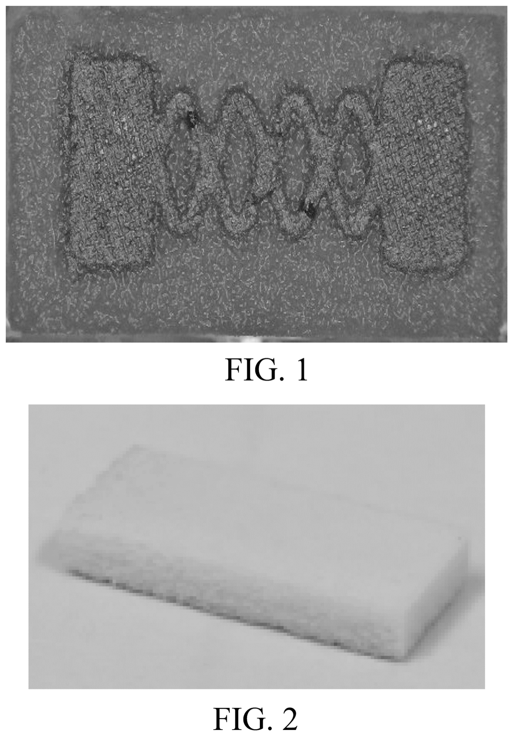

As shown in FIG. 1, the porous substrate of the manufactured atomization core is a porous glass-ceramic substrate (as shown in FIG. 2), and the porous substrate has a pore structure that is in communication with each other.

### Embodiment 2

This embodiment provides an atomization core. A manufacturing method thereof includes the following steps.
1) Mix 100 g of glass bubbles with 25 g of hydroxyethyl cellulose, 2.5 g of sodium stearate, 25 g of a pore-forming agent, and 67 g of water, and perform pressing and forming to obtain a green body, where a forming pressure is 14 bar.
2) Perform a first sintering, a second sintering, and a third sintering on the green body in step 1), to obtain a porous glass-ceramic substrate, where a first sintering temperature is 230°C, a first sintering time is 1 hour, a second sintering temperature is 650°C, a second sintering time is 2 hours, a third sintering temperature is 1210°C, and a third sintering time is 1 hour, and finally, obtain the porous glass-ceramic substrate with natural cooling in a furnace.

Step 3) is the same as that in Embodiment 1.

### Embodiment 3

This embodiment provides an atomization core. A manufacturing method thereof includes the following steps.
1) Mix 100 g of glass bubbles with 25 g of hydroxyethyl cellulose, 2.5 g of sodium stearate, and 75g of water, and perform pressing and forming to obtain a green body, where a forming pressure is 24 bar.

Step 2) and step 3) are the same as those in Embodiment 1.

### Embodiment 4

This embodiment provides an atomization core. A manufacturing method thereof includes the following steps.
1) Mix 20 g of glass bubbles with 80 g of glass powder, 25 g of hydroxyethyl cellulose, 2.5 g of sodium stearate, 50 g of a pore-forming agent, and 75 g of water, and perform pressing and forming to obtain a green body, where a forming pressure is 13 bar. The pore-forming agent is polymethyl methacrylate (PMMA). No particle having a cavity exists in the glass powder, and the glass type of the glass powder is the same as that of the glass bubbles. The particle size of the glass powder ranges from 1 µm to 20 µm.

Step 2) and step 3) are the same as those in Embodiment 1.

### Embodiment 5

This embodiment provides an atomization core. A manufacturing method thereof includes the following steps.
1) Mix 20 g of glass bubbles with 80 g of glass powder, 25 g of hydroxyethyl cellulose, 2.5 g of sodium stearate, 50 g of a pore-forming agent, and 75 g of water, and perform pressing and forming to obtain a green body, where a forming pressure is 24 bar. The pore-forming agent is polymethyl methacrylate (PMMA). No particle having a cavity exists in the glass powder, and the glass type of the glass powder is the same as that of the glass bubbles. The particle size of the glass powder ranges from 1 µm to 20 µm.

Step 2) and step 3) are the same as those in Embodiment 1.

**Table 1: Parameters of glass bubbles of a raw material in an embodiment**

| **Embodiment** | **Intra-sphere porosity %** | **D50 (µm)** | **D10 (µm)** | **D90 (µm)** |
|---|---|---|---|---|
| 1 | 84.8 | 40.63 | 16.99 | 75.97 |
| 2 | 90 | 41 | 19.44 | 70.09 |
| 3 | 84.8 | 40.63 | 16.99 | 75.97 |
| 4 | 84.8 | 40.63 | 16.99 | 75.97 |
| 5 | 90 | 41 | 19.44 | 70.09 |

### Test example 1

Scanning electron micrography (SEM) scanning and element content detection are performed on a porous glass-ceramic substrate of an atomization core according to this embodiment of this application. The element content is detected by using an energy dispersive spectrometer (EDS). The pore size is measured through a mercury intrusion method (a test instrument is a mercury porosimeter).

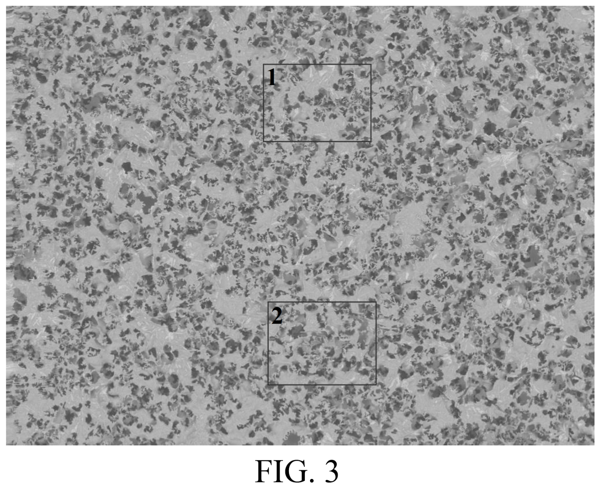

FIG. 3 and FIG. 4 are respectively SEM images and EDS analysis of different measurement areas and different range sizes of Embodiment 2. For measurement areas shown in FIG. 3, two different measurement areas are selected. Length-width ratios of the selected measurement areas are both less than 2, and the selected measurement areas are respectively denoted as Area 1 (or denoted as M) and Area 2 (or denoted as N). Element contents of all measurement areas are detected as shown in Table 2. The detected area is rectangular, and the length of the detected area is 151.17 µm. D50 of the raw material particles is 41 µm, and an average pore size of a finished porous glass-ceramic substrate is 23.07 µm. Apparently, main element differences between Area 1 (or denoted as M) and Area 2 (or denoted as N) are respectively 1% (an O element) and 0% (a Si element). Similarly, results shown in Table 2 are obtained by performing measurement on other embodiments.

**Table 2: Element contents in an embodiment**

| Embodiment | Measurement area number | Main element content (at%) | | | | | | Element content differences between measurement areas (\|M-N\|/N*100%) | | | | | | Measurement area length (µm) | Average pore size (µm) |
|---|---|---|---|---|---|---|---|---|---|---|---|---|---|---|---|
| | | O | Na | Mg | Al | Si | Ca | O % | Na % | Mg % | Al % | Si % | Ca % | | |
| 1 | 1 | 63.36 | 3.37 | 0.17 | 0.29 | 30.44 | 2.37 | 1% | 16% | 70% | 26% | 5% | 3% | 164.66 | 23.82 |
| | 2 | 62.51 | 2.91 | 0.1 | 0.23 | 31.94 | 2.29 | | | | | | | 173.91 | |
| 2 | 1 | 62.51 | 2.41 | 0.16 | 0.38 | 31.54 | 3 | 1% | 17% | 30% | 6% | 0% | 2% | 151.17 | 23.07 |
| | 2 | 61.92 | 2.91 | 0.23 | 0.36 | 31.64 | 2.93 | | | | | | | 157.05 | |
| 3 | 1 | 61.84 | 2.94 | 0.11 | 0.3 | 32.42 | 2.4 | 0% | 11% | 48% | 17% | 2% | 20% | 137 | 19.07 |
| | 2 | 61.83 | 2.64 | 0.21 | 0.36 | 32.95 | 2 | | | | | | | 151.05 | |
| 4 | 1 | 61.85 | 2.77 | 0.13 | 0.34 | 32.26 | 2.65 | 2% | 8% | 66% | 40% | 1% | 7% | 133.65 | 22.55 |
| | 2 | 60.85 | 3.01 | 0.38 | 0.57 | 32.73 | 2.47 | | | | | | | 149.58 | |
| 5 | 1 | 60.82 | 2.76 | 0.13 | 0.33 | 33.73 | 2.23 | 1% | 1% | 35% | 28% | 1% | 9% | 135.88 | 23.23 |
| | 2 | 60.43 | 2.79 | 0.2 | 0.46 | 34.08 | 2.04 | | | | | | | 143.57 | |

As shown in FIG. 4, measurement is performed on different areas selected from the porous glass-ceramic substrate obtained in Embodiment 2.

The detection results are shown in Table 3.

**Table 3: Element contents of different areas in Embodiment 2**

| Embodiment | Measurement area number | Main element content (at%) | | | | | | Element content differences among measurement areas (\|M-N\|/N *100%) | | | | | | Measurement area length (µm) | Average pore size (µm) |
|---|---|---|---|---|---|---|---|---|---|---|---|---|---|---|---|
| | | O | Na | Mg | Al | Si | Ca | O% | Na % | Mg % | Al % | Si% | Ca % | | |
| 2 | 1 | 66.35 | 4.83 | 0.31 | 0.32 | 21.61 | 6.58 | 8% | 163% | 107% | 3% | 28% | 1% | 5 | 23.07 |
| | 2 | 61.19 | 1.84 | 0.15 | 0.33 | 29.87 | 6.62 | 8% | 22% | 15% | 6% | 22% | 221% | 23 | 23.07 |
| | 3 | 56.73 | 2.35 | 0.13 | 0.35 | 38.38 | 2.06 | - | 2.06 | - | 2.06 | - | 2.06 | 30 | 23.07 |

As shown in Table 3, the measurement area of Area 1 is about 5 µm in length and 3 µm in width. A difference between a main composition of an O content in the area and that of Area 2 is 8%, and a difference between another main composition of a Si content in the area and that of Area 2 is 28%. Similarly, significant differences exist between Area 2 and Area 3. The foregoing composition differences are much greater than those in different embodiments in Table 1. The inventor of this application considered through analysis that composition segregation is generated due to phase transformation that is generated during a process of sintering the glass bubbles or glass powder of this application, but the composition segregation only occurs in a small range, and usually does not exceed a range of a single glass bubble. Therefore, when the lengths/ranges of different measurement areas are greater than the length/range of the single glass bubble, a small composition difference thereof exist, that is, the composition is uniform and consistent. Similarly, when the lengths/ranges of different measurement areas are less than the length/range of the single glass bubble, large composition differences thereof exist, that is, the composition is uneven and inconsistent. The reason is that the different smaller areas may be essentially different composition corresponding to the crystalline phase or the glass phase in the substrate material, and have a significant difference in composition. Generally, a size of a crystal particle in the glass-ceramic is less than 1 µm. Therefore, when the lengths/ranges of the measurement areas are greater than 1 µm, several crystalline phase areas and amorphous phase areas may be included in the measurement area in a same proportion, so that test results of the composition tend to be consistent. In other words, different measurement areas have uniform and consistent composition. Further, because a completely molten liquid environment is not formed in this application, the liquid phase usually flows only in a small range between neighboring/adjacent single glass bubbles. However, when the lengths/ranges of the measurement areas are greater than twice the pore size of the substrate, the range can include several sub-areas having composition differences at least in a same proportion, and composition results of different measurement areas tend to be uniform and consistent. To simplify the description, in this application, the average pore size is used as a standard for the length/range of the glass-ceramic bubbles in the substrate.

In this application, the average pore size of the substrate ranges from about 15 µm to 45 µm, and a corresponding length/range of a measurement area is greater than 30-90 µm. It should be noted that in a case in which the measurement area is an ellipse, the length of the measurement area is a long axis thereof. Similarly, when the measurement area is a circle, the length of the measurement area is a diameter thereof. In addition, the length-width ratio of the measurement area should not be excessively large. Generally, a ratio less than 2 can accurately reflect the composition of the measurement area.

As shown in Area 1 in FIG. 4, a microstructure is obviously different from a surrounding structure. It may be learned that the porous glass-ceramic substrate includes the crystalline phase. Further, the crystalline phase includes a quartz phase.

### Test example 2

A compressive strength test is performed on the porous glass-ceramic substrate in the foregoing embodiment. 5 parallel samples are taken from the same embodiment and are respectively tested. For the test method, reference is made to GB/T4740-1999 "Test Method for Compressive Strength of Ceramic Material". Relevant parameters such as the pore size and the porosity of the porous glass-ceramic substrate are measured through a mercury intrusion method (a test instrument is a mercury porosimeter). In a process of inhaling the preset quantity of puffs (the preset quantity of puffs in this application is 500) for the atomization core in the foregoing embodiment, whether a failure situation exists is tested, and statistics collection is performed to record a lifespan situation thereof. The failure situation mainly includes: 1. A significant abnormal change of a resistance of the atomization core (for example, a significant increase in the resistance caused by splitting or shedding of the heating element). 2. A fog output volume is less than half of an initial atomization amount. The foregoing test condition is 6.5 W power and a die (not assembled as an atomizer). Each inhalation process (namely each puff) includes 3s of inhalation and 8s of pause. Test results are shown in Table 4.

**Table 4**

| Embodiment | Compressive strength (mean value) (MPa) | Porosity % | Lifespan (500 puffs) | Average pore size (µm) | Most probable pore size (µm) | D50 pore size (µm) |
|---|---|---|---|---|---|---|
| 1 | 7.83 | 71.87 | No failure | 23.82 | 23.10 | 23.56 |
| 2 | 1.55 | 77.80 | No failure | 23.07 | 22.70 | 22.70 |
| 3 | 7.91 | 66.14 | No failure | 19.07 | 18.97 | 18.97 |
| 4 | 7.00 | 74.58 | No failure | 22.55 | 22.69 | 22.69 |
| 5 | 6.73 | 73 | No failure | 23.23 | 23.18 | 23.18 |

As shown in Table 4, the inventor considered through analysis that the porous glass-ceramic substrate generally has a relatively good compressive strength, and all the substrates are greater than 1.5 MPa. For example, the corresponding porosity is 77.80% in Embodiment 2, which is high and close to 80%, and the porous glass-ceramic substrate still can maintain a relatively high compressive strength. In some embodiments, the compressive strength is greater than 6 MPa, and the corresponding porosity is greater than 60%. The inventor considered through analysis that, above a range greater than the single glass bubble or the glass powder, the composition uniformity is extremely high. Therefore, the overall compressive strength of the substrate is improved, and the strength of the substrate is uniform at each location without obvious local strength defects. In other words, the effect of improving strength uniformity of the porous substrate is achieved. In addition, because the composition is uniform, the porous substrate has higher stability in a case of thermal shock during the atomization process, and it is not easy to locally cause cracks and damage due to different composition. Moreover, no harmful substrate that can be separated out from the composition exists, such as heavy metal. Therefore, the atomization core has a longer service life, and is safer and more reliable.

Obviously, the above embodiments are merely examples for clear description and not limitations on the implementations. For a person of ordinary skill in the art, other changes or alterations in different forms may also be made based on the foregoing description. All implementations are not required and cannot be exhaustive herein. However, the obvious changes or variations derived therefrom still fall within the protection scope of this application.

## Claims

1. An atomization core, comprising a porous substrate and a heating element, wherein
the porous substrate is a porous glass-ceramic substrate, any 2 measurement areas on the porous glass-ceramic substrate are respectively denoted as a first measurement area and a second measurement area, and by atomic percentage, a main element content in the first measurement area is denoted as Mat%, and a corresponding main element content in the second measurement area is denoted as Nat%, wherein |M-N|/M is less than 10% and/or |M-N|/N is less than 10%; and
the length of the measurement area is at least greater than 1 µm; and a main element is an element whose element content in the porous glass-ceramic substrate is greater than 20 at%.

2. The atomization core of claim 1, wherein by atomic percentage, the main element content in the first measurement area is denoted as Mat%, the corresponding main element content in the second measurement area is denoted as Nat%, and |M-N|/M is less than 5% and/or |M-N|/N is less than 5%.

3. The atomization core of claim 1 or 2, wherein the main element comprises a first main element and a second main element; and by atomic percentage, a content of the first main element in the porous glass-ceramic substrate ranges from 55 at% to 64 at%; and a content of the second main element ranges from 20 at% to 36 at%;
preferably, the first main element is O, and the second main element is Si; and
preferably, an element in the porous glass-ceramic substrate further comprises at least one of Na, Mg, Al, or Ca.

4. The atomization core of any one of claims 1 to 3, wherein an average pore size of the porous glass-ceramic substrate ranges from 15 µm to 45 µm.

5. The atomization core of claim 4, wherein the length of the measurement areas is at least twice the average pore size.

6. The atomization core of any one of claims 1 to 5, wherein a compressive strength of the porous glass-ceramic substrate is greater than 1.5 MPa; and
preferably, the compressive strength of the porous glass-ceramic substrate ranges from 6 MPa to 18 MPa.

7. The atomization core of any one of claims 1 to 6, wherein the porous glass-ceramic substrate comprises a crystalline phase and an amorphous phase;
preferably, a proportion of the crystalline phase is more than 50 wt%; and
preferably, the crystalline phase comprises a quartz phase.

8. The atomization core of any one of claims 1 to 7, wherein the measurement area is at least one of a circle, an ellipse, or a rectangle.

9. The atomization core of any one of claims 1 to 8, wherein the heating element is a metal heating film.

10. An atomizer (1), comprising the atomization core of any one of claims 1 to 9.

11. An electronic atomization device, comprising the atomizer (1) of claim 10, and further comprising a battery assembly (2).
